# EUROPEAN PATENT SPECIFICATION

(11) **EP 2 445 357 B1**
(45) Date of publication and mention of the grant of the patent: **29.11.2017**
(21) Application number: 10792383.1
(22) Date of filing: 23.06.2010
(51) Int. Cl.: B30B 11/24

(54) **METHOD FOR MANUFACTURING OF A FEED BLOCK AND PRODUCT**
VERFAHREN ZUR HERSTELLUNG EINES FUTTERBLOCKS UND PRODUKT
PROCÉDÉ POUR FABRIQUER UN BLOC D'ALIMENTATION ET PRODUIT

(30) Priority: 25.06.2009 NO 20092425; 22.06.2010 NO 20100897
(43) Date of publication of application: 02.05.2012
(73) Proprietor: TROUW INTERNATIONAL B.V., NL-5831 JN Boxmeer (NL)
(72) Inventor: SVEINSVOLL, Karl, N-4354 Voll (NO); DENWOOD, Angus, Acton Park, TAS 7170 (AU)
(74) Representative: Håmsø Patentbyrå AS
(86) International application number: PCT/NO2010/000239
(87) International publication number: WO 2010/151140

(56) References cited:
- WO-A1-00/08945
- WO-A1-93/06742
- WO-A1-97/22265
- WO-A1-98/16121
- WO-A1-02/078463
- WO-A1-2004/030466
- WO-A1-2006/098629
- WO-A1-2007/054465
- WO-A2-98/49904
- WO-A2-2008/006972
- WO-A2-2008/006972
- DD-A5- 290 823
- DD-A5- 290 823
- DE-U1- 9 216 931
- GB-A- 2 210 245
- JP-A- S5 375 096
- US-A- 5 290 496
- US-A- 5 773 043

## Description

The invention concerns a feed block for feeding large fish. More particularly the invention relates to a feed block composed of fish feed particles, a digestible binding agent and liquid. The invention also concerns a method for manufacturing of such a feed block..

In intensive fish farming such as farming of salmon and rainbow trout in seawater, dry feed is nearly exclusively used. The water content in these feed particles is below 10%. The water activity is low so that growth of bacteria, mould and fungus is avoided. It is thus possible to store such feed for an extended time. An exception is feed which is used for feeding some fish species as a weaning feed from feeding on rotifers and Artemia larvae and to feeding on a dry feed. Such a feed may have a water content up to 9%. The feed particles manufactured by pressing or extrusion, may have varying cross-section. The smallest diameter may be less than 1 mm and the largest diameter may typically be 12 mm, but the diameter may also be larger. The length may be about 1.5 x the diameter. Feed particles having a diameter of 12 mm will typically weigh about 1.5-2.5 g. It is also known to use small feed particles for feeding of fish in the fry phase. Such feed particles may be formed by so called agglomeration technology, or the feed particles may be formed by crushing larger feed particles, so called crumbles. Agglomerate and crumbles may have a size from less than 70 µm and to 2.3 mm in diameter, but the diameter may be even larger.

Normal slaughtering weight for salmon and trout being farmed is about 4 - 6 kg, but the slaughtering weight may be nearing 7 - 8 kg for some markets demanding large fish. In farming of salmon and trout this is a practical size, and the muscle fibre cross-section is how the consumer wants it. Larger fish becomes sexually mature with subsequent loss of meat quality. Larger fish also demands longer farming time causing increased capital expenditure for the fish farmer.

At good conditions and when salmon and trout grows at their fastest, the daily feed intake will exceed 1% of the body weight and may for some individuals approach 3% in some days. It means that a fish of 4 kg may eat nearly 120 g of dry feed per day, corresponding to about 80 feed particles per day.

Salmon and trout are adapted to a life as active hunters and they hunt preferably near the water surface. In farming they are inured to hunt for feed particles sinking slowly down through the water column. When salmon and trout are transferred from fresh water to seawater, the weight will normally be between 40 and 150 g. This fish is inured to eat feed particles having a diameter of 2 - 3 mm. As the fish is growing, the feed particle size is increased so that it is 9 - 12 mm when the fish body weight exceeds 2 kg.

Halibut (*Hippoglossus hippoglossus*) is another species in commercial fish farming. Halibut is a bottom living flatfish. The flat shape causes that the fish should weigh at least 4 kg before the fillet yield justifies slaughtering. Halibut hunts its prey by sudden lunges from a hidden condition at the seabed. In farms it largely lies quietly at the bottom of the vessel/net cage. The halibut will therefore "assess" if it is worthwhile energy wise to hunt for small food particles.

The halibut female reaches sexual maturity late and weighs 30 - 100 kg before starting to spawn. Intensive fish farming is dependent on supply of artificially inseminated eggs to produce predictable amounts of fry. It is therefore necessary to have access to captive broodstock. Fish of this size ignore feed particles weighing only 2 - 3 g. Parent halibuts are therefore fed so-called wet feed. This is prepared locally. The wet feed is prepared as a mixture of ground fresh fish or ground fresh or acid conserved fish waste, fishmeal, binding agents (e.g. wheat starch), fish oil, minerals and vitamins. This is mixed to a paste, which may be fed out as large lumps, or it may be filled into sausage skin. Some parties also use whole fish with added vitamin capsules.

Another type of farming consists in catching small tuna and feeding them up to marketing size. Small tuna may be between 10 and 30 kg and it is relevant to feed the fish up to 60-80 kg. Also practised is catching large tuna over 80 kg, such as of 200 kg and feed this up to 300 kg. It is also known that tuna may reach a slaughtering weight of 600 kg. For such farming there is also a need to be able to manufacture feed of a size adapted to the size of the fish from 10 kg to 600 kg.

Most of the feed used today in intensive fish farming is so-called dry feed. This is produced industrially. The raw materials consist of vegetable protein, animal protein such as fishmeal, fish oil, vegetable oils, binding agents, minerals, vitamins and possibly colouring agents. The dry raw material is mixed to a paste by addition of water and steam, and it is formed to pellets by extruding the paste through nozzle openings in an extruder, pellet press or other suitable device, and then the paste strings are cut into pieces of suitable length. The formed feed pieces contain a lot of water, typically 20-30% by weight. It is therefore necessary to dry these to a water content of between 10 and 15%. After the drying process oil is added which is being sucked into the pores in the feed pieces. The end product, the finished feed particle will typically contain 5-10 percent of water by weight, 15-40 percent of fat by weight, 30-40 percent of proteins by weight in addition to binding agents, minerals, vitamins and possible colouring agents if desirable to give the fish meat or the fish skin colour. Feed for fat fish, such as salmon, will contain much fat, while feed for lean fish, such as cod, will contain little fat. Dry feed includes agglomerated and crumbled fish feed as well.

The raw materials for industrially produced feed particles are dry ingredients such as fishmeal, chicken meal, blood meal, wheat, soy, lupine, corn gluten, pea meal, minerals and vitamins in the form of premix, and oils such as fish oil, and vegetable oils such as rape seed oil and soy oil. These raw materials are characterised in that they may be transported and stored in bulk and that they have low water content so that it is easy to avoid unwanted decay and mould and fungus formation. An advantage of dry raw materials and raw materials in bulk is simple logistics and the possibility to buy the raw material worldwide. Another advantage is that the raw materials may be combined in different proportions so that a feed may be produced having varying nutrient content adapted to the species of animals that the feed is planned for. This is denoted as a formulated feed. Among other things the proportions of proteins and fat may be varied within wide limits. A third advantage with the industrialised produced dry feed is that it may easily be stored and transported and thus be available for the farmer at the time he needs it.

An alternative to the industrially produced feed is local production of feed based on such as fresh fish, frozen fish, fresh fish waste and conserved fish waste. Such feeds are denoted as wet feeds or soft feeds and contain more than 15% of water.

Conserved fish waste may be such as frozen material, waste with organic acid or other conservation agents added. This wet material is mixed with a suitable binding agent such as potato starch or wheat starch, fat, such as fish oil, and vitamins, minerals and possibly colouring agent. The mixing may for example be carried out in a suitable mill. The mass in paste form may be formed to coherent, relatively loose feed pieces by being forced through a holed disc, or it may be fed as it is by means of a spoon shaped or ladle shaped implement. It may also be filled into such as sausage skin to give the feed a more firm form.

Patent document WO 95/28830 describes the manufacturing of a feed consisting of 0.5-10% alginate. Alginate is mixed with the usual dry feed ingredients and with water to a slurry. The mass is thereafter exposed to divalent cations so that a water stable gel is formed and this is formed into pellets.

Patent document NO 95894 describes manufacturing of a fish feed where the ingredients are stirred in water and where water soluble, gel-forming components such as Na-alginate are added. Also added are a calcium phosphate and a retarding phosphate. The mass without calcium salt may also be squirted out into a coagulating bath consisting of calcium salt. The patent also describes a method wherein the nutrients and the sodium alginate solution are forced through a double walled nozzle such that the nutrients are forced through the inner nozzle while the sodium alginate solution is applied through the outer nozzle.

Patent document NO 19910390 describes the manufacturing of a wet feed having a controllable structure and rate of descent. This feed is made up of a material developing CO₂ under acid conditions such as shrimp shell, an acid forming material such as an ensilage acid, alginate or another gel-forming component and proteins and fat. Patent document US 3,889,007 describes the manufacturing of a gelled wet feed consisting of fishmeal, glue water, fish oil and gelatine. Binding agents like "guar gum", agar, carboxymethyl cellulose and alginate may be used. This feed dissolves slowly in water and is particularly intended for farming of shrimps.

Patent document US 6,716,470 describes the manufacturing of an animal feed of the gelled wet feed type consisting of fishmeal and possibly poultry meal, fish oil and vitamins and minerals. Smaller amounts of possibly casein, beet mass, lecithin, yeast and algae may be added. The binding agent may consist of a mixture of locust bean gum, carrageenan and xanthan gum. A heated slurry of dry ingredients with water is made where water constitutes 75% of the mixture. The mixture is pumped through a long pipe surrounded by a water jacket, and gelled, cooled product is collected at the outlet end of the pipe. The temperature of the mixture is at least 50°C (120°F) but preferably at least 65°C (150°F), and preferably more than 82°C (180°F). At the outlet of the pipe the gelled product should preferably be at room temperature, 18-21°C. This is contingent upon a relatively long pipe, 51 cm (20 feet) or more, for the gel mixture to have sufficient retention period, about 2 minutes, in the pipe for the gel mixture to be cooled and thereby gel. The pipe is surrounded by a cooling jacket or a cooling bath for the gel mixture to be cooled.

Patent document US 4,935,250 describes a method for covering the surface of a traditionally manufactured dry feed with a film of alginate or guar gum. Tragacanth, pectin or gelatine may also be used. The object is to increase the palatability of the dry feed by giving each single pellet a soft and flexible surface.

Patent document WO 2004/030466 describes a feed block and a method where large feed pieces made up from smaller pressed or extruded feed particles are provided and where these are bound together by a gel or by solid fat. The gel is formed by mixing a gel forming substance to a liquid prior to the gel forming liquid is mixed with the feed particles.

Patent document US 3,889,007 describes a food composition for aquatic organisms comprising fish meal, a fish extract such as stick water, fish solubles, sea water and an organic binder. Patent document WO 02/078463 describes a microparticulate diet for the culture of larval fish and crustaceans. Patent document WO 98/49904 describes a method for preparing high oil content fish feed pellets. Porous pellets are formed by extrusion and oil is added after extrusion. Patent document JP S53 75096 describes fish feed comprising wheat gluten. Patent document WO 2007/054465 describes pressed pellets substantially made of dry vital wheat gluten.

It is possible to increase the diameter of dry feed beyond today's sizes. In this manner there is for test purposes produced extruded feed particles having a diameter of up to 30 mm. With a length corresponding to 1.5 x diameter, the largest of such feed particles will weigh more than 30 g and thus be considerably larger than today's dry feed. Such large feed particles contain at least 20 percent by weight of water after forming. These must be dried to be storage stable. In the drying process water is removed from the feed particles' surface by evaporation. Water further inside of the feed particles must first diffuse out to the surface before it can evaporate. The drying time therefore increases with increasing particle diameter. Feed particles having a diameter more than 20 mm requires a relatively long drying time compared to feed particles having a diameter of 12 mm and feed particles having even smaller diameter.

The problem of the diffusion rate being decisive for the drying time is sought solved by forming the feed particles having one or more through holes in their longitudinal direction. This reduces the distance from a surface in to the point in the particle lying furthest away from a surface. This distance is deciding for the necessary drying time. Such a feed particle form is described in the patent document NO 19950139. One drawback with such a form of feed particles is that it breaks easily or is crushed in the subsequent process steps like drying, oil coating, cooling and packing. Another drawback is that such feed particles take up more room per weight unit relative to conventional feed particles. This makes storage and transport more costly. Correspondingly it takes longer to dish out this feed and the fish must eat more feed particles to achieve the same feed intake.

For the industry it is an advantage to be able to produce different feed particles with the same production equipment on one production line. Extended drying time means that the dryer capacity is lowered, and the capacity in the whole production line is thereby lowered.

The forming machines, such as extruders, are operated continuously, and there are limits to how far down they may be regulated in production volume without the process stopping. There is therefore a connection between the feed particle's diameter, drying time, and production volume. If the feed particle's diameter exceeds a critical limit, the drying time becomes too long, and the capacity of the line sinks below where the forming machine may be operated continuously. With prior art it is therefore limited how large feed particles may be produced.

Reduced capacity also means that there will be fewer kg feed to distribute the fixed and variable costs on, so that it becomes disproportionately expensive to produce large feed particles.

Large feed particles are more susceptible to breakage than are small pellet pieces. More binding agent, such as wheat, peas or beans need therefore to be added. To obtain a good gelatinisation of the starch in the binding agent, supply of thermal and mechanical energy in such as the extruder cylinder, is required. When the hole in the die plate has a diameter of 30 mm or more, it is getting close to the diameter of the extruder front plate. The result is that the necessary pressure build-up in the extrudate fails to appear. This results in that the starch does not gelatinise well enough to give a good binding, the feed ingredients are not mixed well enough, and it is difficult to form the extrudate into feed particles.

When feeding fish of some fish species, especially when they are young, it has turned out to be difficult to get these to accept dry feed particles. Dry feed particles, especially those manufactured by pressing or extrusion, have a hard texture. There is thus a wish to provide small feed particles with a soft texture as well. This will simplify the inuring to a formulated feed for e.g. younger individuals of marine fish species e.g. wrasses, especially ballan wrasse (*Labrus bergylta*).

A series of these drawbacks are overcome by manufacturing feed pieces according to WO 2004/030466. WO 2004/030466 does not declare further the method, which may be used to manufacture the feed pieces on an industrial scale beyond the obvious that the feed pieces may be manufactured by means of some moulding technique. The examples in WO 2004/030466 states that suitable containers were first filled with dry feed particles and that a suitable edible gel solution was poured over the pellets. Alternatively pellets and edible gel solution or liquid fat may be mixed with pellets before the mixture is poured into suitable containers. WO 2004/030466 also states that dry pellets and gel containing liquid is mixed in a continuous process where the mixture is formed to a string and cut into pieces of suitable lengths after the gelling process is finished, but WO 2004/030466 does not give a solution as to how such a method shall be carried out.

The method in WO 2004/030466 in the form of some moulding technique has a few drawbacks. It is a drawback that the fat needs to be melted before it can be used as a binding agent according to WO 2004/030466. A series of the edible, useful gel-forming materials, such as agar, locust bean meal and carrageenan only dissolve satisfactorily in warm water at a temperature of over 80°C. Heating of fat and liquids require separate heating containers and supply of power. It will also be advantageous to be able to produce the feed blocks in the vicinity of the fish farm, for example onboard a boat. Here the access to seawater will be good, while access to fresh water might be limited. In some cases fresh water needs therefore to be transported to the production site together with the other raw materials. Some of the gel-forming materials listed in WO 2004/030466 only dissolve satisfactorily in fresh water and not in seawater. Some gel-forming materials gel in the presence of special cations, further complicating the production process. Some gel-forming materials, such as gelatine, only dissolve in cold water, but the gel formation takes a long time and must take place cold. Another drawback with the method described in WO 2004/030466 is that the feed block contains relatively a large amount of water, usually more than 50% of water. Fish do not need water in the feed. The water in the feed reduces the capacity of the feeding device measured as amount of food per unit of time.

It has turned out that it may be difficult in moulding technique to cover the feed particles well enough with gel. This results in loose feed particles falling off the feed block in subsequent treatment, giving large wastage. It is particularly important that the feed particles are well bound to the feed block when it hits the water in feeding. Small, loose feed particles will sink to the bottom without being eaten as the fish being fed, as mentioned earlier, is of such a size that small feed particles are not interesting as food is concerned.

Moulding of food articles by means of machines is known from among other places the sugar and chocolate industry. A review of prior art has shown that such equipment is not suitable for manufacturing of feed blocks. This is because a feed block is substantially larger than for example chocolate pieces, jelly figures or wine gum figures. Another drawback is the price of such equipment. Due to the high water content in the feed block and hence the short shelf life at room temperature, it is desirable to have a mechanical production near the fish farm using the feed blocks. It is thus desirable to provide simple and reasonably priced machinery.

By extrusion is here meant a so called cooking extrusion. Cooking extrusion comprises that a paste is subject to a temperature above 100°C and a pressure above atmospheric pressure prior to the paste being pressed through a die plate and shaped into a string which obtain a fixed cross section when the expansion is completed.

By formulated feed is here meant a feed composed of a mixture of raw materials such that the feed covers the entire nutritional demand of the animal to which the feed is intended.

By feed particle is here meant pellets manufactured by pressing, pellets manufactured by extrusion, particles manufactured by agglomeration or particles manufactured by crushing pressed or extruded pellets, so called crumbles. Pressed and extruded pellets and crumbles have a water content which is less than 12%. Agglomerate has a water content less than 12%. The feed particles mentioned here, are denoted as dry feed.

By fresh water is here meant water having a salt content less than 0.05 percent by weight of salt. By brackish water is meant water having a salt content of 0.05 to 3.0 percent by weight of salt. By salt water is meant water having a salt content of 3.0 to 5.0 percent by weight of salt. Salt water thus includes seawater having a salt content of 3.1 to 3.8 percent by weight of salt. By brine is meant water having a salt content of from 5.0 percent by weight of salt or more.

By liquid is here meant fresh water, brackish water, salt water and brine.

By digestible binding agent is meant here that the binding agent at least partly is absorbed from an intestine.

By edible binding agent is meant here that the binding agent does not harm the organism and has no negative influence in the form of reduced growth or reduced health. The edible binding agent may be digestively inert.

By cold water soluble binding agent is meant that the binding agent in all material aspects dissolves in a liquid colder than 50°C.

The object of the invention is to remedy or reduce at least one of the disadvantages of the prior art, or at least provide a useful alternative to prior art.

The object is achieved by the features disclosed in the following description and in the subsequent claims.

The invention provides an improved feed block and a method for manufacturing of feed blocks for fish. Particularly there is provided a feed block exhibiting a length/diameter ratio larger than 1.5, for example larger than 2.5, for example larger than 5, for example larger than 7.5, for example larger than 10. There is also provided an apparatus which in an efficient and reasonable way forms feed pieces having a greater length and diameter than can be achieved by ordinary extrusion technique known from manufacturing of extruded dry feed.

Feed particles of the dry feed type are manufactured in a known way. The dry feed particles are subsequently mixed with a dry binding agent. Feed particles with binding agent are a first intermediate product for production of feed blocks. The first intermediate product may be manufactured well in advance of further processing to feed blocks as the shelf life is good. The first intermediate product may thus be manufactured at the factory producing the dry feed particles, in a continuous process or in a batch process and thereafter packed in suitable packaging such as sacks or in big bags. Delivery in bulk may also be an alternative. In an alternative embodiment the binding agent and the dry feed particles may be mixed in conjunction with the fish farm using the feed blocks. This may be done batch-wise in a suitable mixing device or in a continuous process where a material flow of feed particles from a first dosing device is mixed with a material flow of binding agent from a second dosing device. The two material flows may be brought together prior to the mixing device or in the mixing device itself. The mixing time is adjusted after a visual evaluation of when the binding agent is evenly distributed on the pellet surfaces.

It may be advantageous that there in addition to the binding agent is also mixed in a dry protein rich meal such as fish meal, to the intermediate product. This has the advantage of increasing the nutritional value of the intermediate product. The protein rich meal may be mixed with the dry feed before, concurrent with or after mixing in of the binding agent.

The mixing device for producing the first intermediate product may be of a *per se* known type like a paddle mixer, a single or a double rib mixer, a "Forberg" type mixer, or a mixer having other suitable mixing device such as a dough mixer.

Manufacturing of feed block takes place by first adding liquid to the first intermediate product to form a second intermediate product. The mixing may take place batch-wise in a suitable mixing device. Alternatively the mixing may take place continuously in that a material flow of the first intermediate product comes from a third dosing device and liquid from a fourth dosing device. The two material flows may be brought together in front of the mixing device or in the mixing device itself. The mixing time is adjusted according to a visual evaluation of when the liquid is evenly distributed in the second intermediate product.

The mixing device for producing the second intermediate product may be of a per se known type like a paddle mixer, a single or a double rib mixer, a "Forberg" type mixer, or a mixer having other suitable mixing device such as a dough mixer.

The person versed in the art will know that in an alternative embodiment the first and the second intermediate products may be formed in the same mixing device by first mixing the dry feed particles with the dry binding agent, possibly also a dry protein bearing meal, and thereafter supplying liquid to the mixture.

In a further alternative embodiment dry feed particles are first mixed with liquid. When the liquid is uniformly distributed on the pellets so that these are moist, the dry binding agent is added to the moist pellets.

The second intermediate product is conveyed into a suitable forming device such as a grinder, for example a meat grinder. The grinder is provided with a screw conveyor carrying the second intermediate product forward toward a holed disc and forcing the second intermediate product through at least one hole/nozzle in the holed disc. The cross-section of the at least one nozzle may cylindrical. The holed disc may exhibit several nozzles. The end product, the feed block exits the opening of the nozzle at the free end of the nozzle. The feed block has the same cross-sectional shape and size as the nozzle as no expansion or contraction of the feed block occurs at the free end of the nozzle. The nozzle may have a circular cross-section, an elliptic cross-section or another desired cross-section. The cross-sectional area of the nozzle is adapted to the desired feed block size.

In an alternative embodiment the holed disc is replaced by an extension of the grinder housing where the extension in all material aspects has the same cross-sectional shape and diameter as the inside cross-sectional shape and diameter of the grinder housing.

The feed block is forced out as a string from the free end of the nozzle.

The apparatus may be provided with a cutting device for cutting the feed string into suitable lengths when it is forced out of the nozzle. The length of the feed block may alternatively be formed by that the portion extending from the nozzle, under influence of gravity and dependent on the mechanical strength of the string, is broken loose and falls down as the formed end portions of the feed block are constituted by randomly formed fracture surfaces.

The finished formed feed blocks may fall down into a suitable container and be transported in this up to a fish farm. In an alternative embodiment where forming of the feed blocks take place in the immediate vicinity of where the fish is, for example onboard a boat or on a raft, the formed feed blocks may be carried directly to a feeding area, for example by the feed blocks being carried away from the nozzle with a flow of water, a conveyor belt or a flow of air.

The invention relates in a first aspect to a feed block containing feed particles, at least one binding agent and liquid wherein the binding agent is selected from a group consisting of cold water soluble starch and wheat gluten, and the binding agent is distributed over the feed particles' surfaces; and the feed block contains less than 40 percent of water by weight. Particularly the feed block may contain less than 36 percent of water by weight.

The above-mentioned starch may be selected from the group consisting of modified potato starch or modified rice starch. The above starch may further be selected from the group consisting of cereal starch, seed starch, fruit starch, root vegetable starch or marrow starch. Cereal starch may comprise starch from such as wheat including "waxy wheat", wheat bran mixture and spelt, oat, rye, barley, rice including "waxy rice" and "sake lee", corn including "waxy maize", triticale, durra, crab grass, fonio (*Digitaria exilis*), or love grass (*Eragrostis tef*). Seed and fruit starch may comprise starch from such as peas, beans including faba beans, bananas, buckwheat, quinoa (*Chenopodium quinoa*), or amaranth. Root vegetable and marrow starch may comprise starch from such as potato, sweet potato, yam, oka (*Oxalis tuberosa*), arracaccia (*Arracaccia xanthoriza*), tapioca, taro (*Colocasia esculenta*) or sago.
The above-mentioned wheat gluten may consist of vital wheat gluten. In an alternative embodiment the binding agent is constituted by wheat gluten, particularly vital wheat gluten, and CaCl₂ may be added to the liquid.
The invention relates in a second aspect to a method for manufacturing of a feed block containing feed particles, a binding agent and liquid wherein:
- step 1 comprises mixing of feed particles with in arbitrary sequence a dry, cold water soluble, edible and digestible binding agent selected from a group consisting of starch and wheat gluten, and cold liquid such that the binding agent is distributed over the feed particles' surfaces and the amount of liquid is such that the complete mixture contains less than 40% of water by weight;
- step 2 comprises forcing of the mixture from step 1 through a holed disc; and
- step 3 comprises that the feed string formed in step 2 is broken in suitable pieces by their own weight or cut with a knife.
The above-mentioned binding agent may be a wheat gluten consisting vital wheat gluten. The above-mentioned liquid may be selected from the group consisting of fresh water, brackish water, seawater or salt water.
In the following are described examples of preferred embodiments illustrated in the accompanying drawing, wherein:

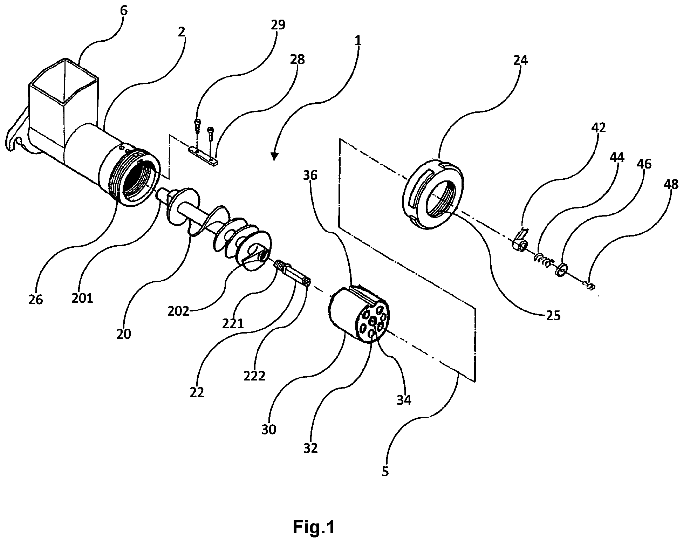

- Fig. 1: shows an exploded view of a detail in a grinder suitable for manufacturing feed blocks according to the invention.
In the figure the reference numeral 1 indicates a grinder portion mounted on a not shown industrial grinder, for example of the meat grinder type. The industrial grinder will be allocated a mixing device, a supply container, a motor, a power source and the necessary control instruments, all being of *per se* known art.
The grinder portion 1 consists of a mainly tubular grinder housing 2 including a screw conveyor 20 being rotatable about an axis 5. The screw conveyor 20 is in its first end portion 201 formed to be connected to a not shown motor. The screw conveyor 20 is in its second end portion 202 connected to a shaft 22 carried bearingly through the central hole 34 of a holed disc 30. The holed disc 30 is provided with a guide track 36 fitting complementary to a guide rail 28. The guide rail 28 is fixed to the inside of the grinder housing 2 with fixation means 29. The guide track 36 and the guide rail 28 prevent the holed disc 30 from being rotated about the axis 5 when the screw conveyor 20 rotates. The holed disc 30 is clamped to the grinder housing 2 by a holding element 24. The inside of the holding element is provided with a threaded portion 25 complementary to a threaded portion 26 on the outside of the grinder housing 2.

The holed disc 30 is provided with at least one nozzle opening 32 therethrough, in this example with 6 nozzle openings 32. The nozzle openings 32 are arranged equidistant relative to the central hole 34 and parallel with the axis 5.

The shaft 22 is at its one end portion 221 connected to the screw conveyor 20. The shaft 22 may at its other end portion 222 be provided with two parallel, flat sides fitting complementary with a recess in a knife 42 such that the knife 42 rotates with the shaft 22. The knife 42 is clamped against the end portion 222 by a spring 44, a disc 46 and a fixation element 48 led through the disc 46, the spring 44 and fastened to the end portion 222. The knife 42 may have one or more arms, and is in the figure shown with one arm. The knife 42 is made to rotate by the screw conveyor 20 via the shaft 22 and rests against the free end surface of the holed disc 30.

The grinder housing 2 is provided with a feeder opening 6 where the mixture of feed particles, binding agent and liquid may be conveyed into the grinder portion 1.

### Example 1

As forming machine for feed block was used a grinder 1 of the type Kolbe TW/SW 98. The ordinary feed screw 20 in the grinder 1 was used. This has a speed of 200 revolutions per minute. The ordinary holed disc was replaced with a new holed disc 30 made from a *per se* well-known alloy, a so-called aluminium bronze alloy, which gives smooth surfaces. The holed disc 30 had a diameter of 96 mm and a length of 70 mm. The holed disc 30 was provided with 6 through nozzles 32, all parallel with the central axis 5 of the holed disc 30. The diameter of the nozzles 32 were 22 mm giving a total daylight opening of 31.5% for the holed disc 30 and a length/diameter ratio for the nozzle 32 of 3.18. The holed disc 30 was further provided with a central hole 34 therethrough. In the central hole 34 was placed a through shaft 22 which at its first end 221 facing the feed screw 20 was bearingly fastened to the feed screw 20 with a screwed connection and in its other end 222 was provided with two flat parallel sides for attachment of a one-armed knife 42. The holed disc 30 was preloaded against the grinder housing 2 of the grinder 1 with a surrounding holding element 24 provided with a threaded portion 25 fitting complementary to a threaded portion 26 on the forward, outer shell surface of the grinder housing 2.

Extruded, pelletized fish feed from Skretting having a diameter of 3 mm and containing 48% protein, 28% fat and 8% water, was mixed with a cold water soluble binding agent in powder form. More particularly 7.9 kg fish feed was dry mixed with 0.3 kg modified potato starch (Swely gel 700, Lyckeby Culinar) in a mixer of the type Vari-omix R100. The mixture was stirred for about 30 seconds until the dry binding agent was evenly distributed over the pellet surfaces. Thereafter 1.8 litres of fresh water at a temperature of about 6°C was added to the mixture and the total mixture was stirred for a further approx. 90 seconds. The complete mixture contained about 25 percent water by weight.

The mixture consisting of feed particles, binding agent and water was conveyed into the grinder housing 2 through the feeder opening 6 and forced out through the holed disc 30. The mixture came out as a coherent string. This broke up into pieces about 8 - 10 cm long by their own weights. The lengths were thus about 3.5 to 4.5 times the diameter. The feed particles were highly intact and the feed particles in the string surface were distinct. The binding agent was evenly distributed between the feed particles. The feed string was tough, exhibited good binding of the individual feed particles and withstood mechanical loading such as falling from a height of 6 m down onto a concrete floor without breaking up and without individual pellets coming off. The produced feed string pieces or feed blocks were very well suited for feeding of large fish such as tuna, and would endure being spread out to fish in a net cage by means of such as spading.

### Example 2

Feed blocks were manufactured in the same way as in example 1. The feed blocks were put together from 5.3 kg of extruded fish feed of the same type as in example 1. To this was added 1.6 kg of dry fishmeal and 0.3 kg of modified potato flour of the same type as in example 1. To the dry mixture was thereafter added 2.8 l of fresh water at a temperature of about 6°C. The complete mixture contained about 34 percent of water by weight.

The produced feed blocks were very well suited for feeding of large fish such as tuna, and would endure being spread out to fish in a net cage by means of such as spading.

### Example 3

Feed blocks were manufactured in the same way as in example 1. The feed blocks were put together from 7.3 kg of extruded fish feed of the same type as in example 1. To this was added 0.25 kg of dry fishmeal and 0.25 kg of vital wheat gluten of so-called "high elasticity" quality. To the dry mixture was thereafter added 2.2 l of fresh water at a temperature of about 6°C. The complete mixture contained about 28 percent of water by weight.

The produced feed blocks were very well suited for feeding of large fish such as tuna, and would endure being spread out to fish in a net cage by means of such as spading.

### Example 4

Feed blocks were manufactured in the same way as in example 1. The feed blocks were put together from 5.4 kg of extruded fish feed of the same type as in example 1. To this was added 1.6 kg of dry fishmeal and 0.18 kg of modified potato flour of the same type as in example 1. To the dry mixture was thereafter added 2.8 l of fresh water at a temperature of about 10°C. The complete mixture contained about 35 percent water by weight.

The produced feed blocks were very well suited for feeding of large fish such as tuna, and would endure being spread out to fish in a net cage by means of such as spading. Use of seawater was subjectively assessed to give feed blocks of slightly higher strength than use of a corresponding amount of fresh water. The assessment was done after the feed blocks were thrown 10-12 m through the air by use of a spade and landing on a concrete floor.

### Example 5

Feed blocks were manufactured in the same way as in example 1. The feed blocks were put together from 4.9 kg of extruded fish feed from Skretting having a diameter of 4.5 mm and containing 48% of protein, 28% of fat and 6% of water. To this was added 2.0 kg of dry fishmeal and 0.22 kg of modified rice starch (Remyline 663B). To the dry mixture was thereafter added 3.4 l of fresh water at a temperature of about 6°C. The complete mixture contained about 36 percent of water by weight.

The produced feed blocks were very well suited for feeding of large fish such as tuna, but will due to the high water content be best suited for feeding directly from a machine without intermediate storage and transport of the feed blocks.

### Example 6

Feed blocks were manufactured in the same way as in example 1 but with a nozzle 32 exhibiting a diameter of 3 mm and a length of 40 mm. This provided a length/diameter ratio for the nozzle 32 of 13.33. The feed blocks were put together from 3.4 kg of extruded fish feed having a diameter of 1.5 mm. To this was added 0.04 kg of dry krill meal and 0.5 kg of vital wheat gluten of the same kind as in example 3. Mixing time was approx. 1 min. CaCl₂, 21 g, was dissolved in 1 l of fresh water at a temperature of about 6°C. The CaCl₂ solution was mixed with the dry ingredients for about 30 seconds. The complete mixture contained about 26 percent of water by weight.

Comparative trials were conducted with an equal amount of fresh water not added with CaCl₂ and with an equal amount of seawater not added CaCl₂. Surprisingly, addition of CaCl₂ to the fresh water gave a much stronger binding between the feed particles within the feed block compared to fresh water alone. This was assessed by a far less number of feed particles loosened from the feed block when fed to fish. Use of seawater gave a better binding compared to use of pure fresh water, but weaker than use of CaCl₂ solution.

### Example 7

Feed blocks were put together from 3.4 kg Gemma micro (Skretting) which is an agglomerated fish feed. Feed particle size was 0.8 mm. To this was added 0.04 kg of dry krill meal and 0.5 kg of vital wheat gluten of the same kind and in the same way as in example 6. Thereafter 1.0 l of seawater at a temperature of about 10°C was added to the dry mixture. The complete mixture contained about 26 percent of water by weight.

As forming device was used the same machine as in example 1, but with a first holed disc 30 with a nozzle diameter of 2 mm. The provided feed blocks were fed to farmed ballan wrasse. The fish weighed about 15 g.

### Example 8

Feed blocks were manufactured by replacing the holed disc 30 in example 1 with another holed disc 30. The holed disc 30 in this example was provided with one nozzle 32 having a diameter of 60 mm. The length of the holed disc 30 was 30 mm. The holed disc 30 was further provided with a nozzle extension having the same inside cross-section and inside diameter as the nozzle 32 so that the total length was 190 mm.

The feed blocks were put together from 6.8 kg of extruded fish feed from Skretting having a diameter of 12 mm and containing 31% of protein, 39% of fat and 6% of water. To this was added 0.46 kg of dry fishmeal and 0.23 kg of modified potato starch (Swely Gel 700). To the dry mixture was thereafter added 1.2 l of fresh water at a temperature of about 6°C. The complete mixture contained about 21 percent of water by weight.

The produced feed blocks were very well suited for feeding of large fish such as tuna, but were more exposed to breakage during handling than blocks manufactured from pellets having a smaller diameter.

### Example 9

Feed blocks were manufactured by replacing the holed disc 30 in example 1 with a holed disc 30, 70 mm long and provided with 2 nozzles 32. The nozzles 32 had an oblong cross-section. This means that the nozzles 32 were made with a 30 mm milling cutter, which was displaced 18 mm so that the largest diameter was 48 mm and the smallest diameter was 30 mm. The positioning of the nozzles 32 on the holed disc 30 and the positioning of the holed disc 30 relative to the grinder housing 2 were such that the direction of the largest diameter of the nozzles 32 was approximately vertical in the working position of the holed disc 30. The feed blocks were made up according to the same recipe as in example 5.

This nozzle geometry and the orientation of the nozzle holes had the advantage that the feed blocks became very long, about 20 cm, before they broke off due to their own weight. It was also advantageous that the place of failure became slightly oblong so that the end portions appeared rounded.

### Example 10

In addition to said holed discs 30, the following holed discs 30 has been tested with good results:
- nozzle 32: diameter 1.5 mm, length 18.5 mm; length/diameter ratio = 12.33
- nozzle 32: diameter 6 mm, length 60 mm; length/diameter ratio = 10
Based on these trials an upper length/diameter ratio equal to or less than 20 appears to be suitable for this purpose.

## Claims

1. Method for manufacturing of a feed block, where the feed block contains:
- feed particles;
- a binding agent; and
- liquid,
**characterised in that**:
- step 1 comprises mixing of dry feed particles with in an arbitrary sequence a dry, cold water soluble, edible and digestible binding agent selected from a group consisting of starch and wheat gluten, and cold liquid such that the binding agent is distributed over the feed particles' surfaces and the amount of liquid is such that the complete mixture contains less than 40% of water by weight;
- step 2 comprises forcing the mixture from step 1 through a holed disc (30); and
- step 3 comprises that the feed string formed in step 2 is broken up into suitable pieces by their own weight or are cut with a knife (42).

2. Method according to claim 1, **characterised in that** the wheat gluten consists of vital wheat gluten.

3. Method according to claim 1, **characterised in that** the liquid is selected from the group consisting of fresh water, brackish water, seawater or salt water.

4. Method according to claim 1, **characterised in that** fresh water or seawater constitute said liquid, wheat gluten constitutes said binding agent, and CaCl₂ is added to said liquid.

5. Feed block manufactured according to claim 1, said feed block containing:
- feed particles;
- at least one binding agent; and
- liquid,
**characterised in that** the binding agent is selected from a group consisting of cold water soluble starch and wheat gluten and distributed over the feed particles' surfaces; and the feed block contains less than 40% of water by weight.

6. Feed block according to claim 5, **characterised in that** the feed block contains less than 36% of water by weight.

7. Feed block according to claim 5, **characterised in that** the starch is selected from the group consisting of modified potato starch or modified rice starch.

8. Feed block according to claim 5, **characterised in that** the starch is selected from the group consisting of cereal starch, seed starch, fruit starch, root vegetable starch or marrow starch.

9. Feed block according to claim 5, **characterised in that** said wheat gluten consists of vital wheat gluten.

10. Feed block according to claim 9, **characterised in that** said liquid contains added CaCl₂.

## Patentansprüche

1. Verfahren zur Herstellung eines Futterblocks, wobei der Futterblock enthält:
- Futterpartikel;
- ein Bindemittel; und
- Flüssigkeit,
**dadurch gekennzeichnet, dass**:
- Schritt 1 Mischen von trockenen Futterpartikeln in beliebiger Reihenfolge mit einem trockenen, kaltwasserlöslichen, essbaren und verdaulichen Bindemittel, ausgesucht aus der Gruppe bestehend aus Stärke und Weizengluten, und kalter Flüssigkeit umfasst, sodass das Bindemittel über die Futterpartikeloberflächen verteilt ist und die Menge an Flüssigkeit so ist, dass die gesamte Mischung weniger als 40 Gewichtsprozent Wasser enthält;
- Schritt 2 Zwingen der Mischung gemäss Schritt 1 durch eine Lochscheibe (30) umfasst; und
- Schritt 3 umfasst, dass der Futterstrang, der in Schritt 2 geformt wurde, durch ihr eigenes Gewicht oder mit einem Messer (42) geschnitten, in passende Stücke aufgebrochen wird.

2. Verfahren gemäss Anspruch 1, **dadurch gekennzeichnet, dass** das Weizengluten aus essentiellem Weizengluten besteht.

3. Verfahren gemäss Anspruch 1, **dadurch gekennzeichnet, dass** die Flüssigkeit ausgesucht ist aus der Gruppe bestehend aus Frischwasser, Brackwasser, Meerwasser oder Salzwasser.

4. Verfahren gemäss Anspruch 1, **dadurch gekennzeichnet, dass** Frischwasser oder Meerwasser die besagte Flüssigkeit konstituieren, Weizengluten das besagte Bindemittel konstituiert und CaCl₂ der besagten Flüssigkeit zugegeben wird.

5. Futterblock hergestellt nach Anspruch 1, wobei der besagte Futterblock enthält:
- Futterpartikel;
- mindestens ein Bindemittel; und
- Flüssigkeit,
**dadurch gekennzeichnet, dass** das Bindemittel ausgesucht ist aus der Gruppe bestehend aus kaltwasserlöslicher Stärke und Weizengluten und über die Futterpartikeloberflächen verteilt ist; und der Futterblock weniger als 40 Gewichtsprozent Wasser enthält.

6. Futterblock gemäss Anspruch 5, **dadurch gekennzeichnet, dass** der Futterblock weniger als 36 Gewichtsprozent Wasser enthält.

7. Futterblock nach Anspruch 5, **dadurch gekennzeichnet, dass** die Stärke ausgesucht ist aus der Gruppe bestehend aus modifizierter Kartoffelstärke oder modifizierter Reisstärke.

8. Futterblock gemäss Anspruch 5, **dadurch gekennzeichnet, dass** die Stärke ausgesucht ist aus der Gruppe bestehend aus Getreidestärke, Samenstärke, Fruchtstärke, Wurzelgemüsestärke oder Markstärke.

9. Futterblock gemäss Anspruch 5, **dadurch gekennzeichnet, dass** das besagten Weizengluten aus essentiellem Weizengluten besteht.

10. Futterblock gemäss Anspruch 9, **dadurch gekennzeichnet, dass** die besagte Flüssigkeit zugegebenes CaCl₂ enthält.

## Revendications

1. Un procédé de fabrication d'un bloc d'alimentation, où le bloc d'alimentation contient :
- des particules alimentaires ;
- un agent de liaison ; et
- un liquide,
**caractérisé en ce que**
- l'étape 1 comprend mélanger des particules alimentaires sèches avec, dans une séquence arbitraire, un agent de liaison sec, soluble dans l'eau froide, comestible et digérable choisi du groupe consistant de l'amidon et du gluten de blé, et un liquide froid de sorte que l'agent de liaison est distribué sur les surfaces des particules alimentaires et la quantité de liquide est telle que le mélange complet contient moins de 40% d'eau par poids ;
- l'étape 2 comprend forcer le mélange de l'étape 1 à travers un disque perforé (30) ; et
- l'étape 3 comprend que le fil d'alimentation formé dans l'étape 2 est brisé en pièces appropriées par leur propre poids ou sont coupées à l'aide d'un couteau (42).

2. Un procédé de fabrication selon la revendication 1, **caractérisé en ce que** le gluten de blé consiste de gluten de blé vital.

3. Un procédé selon la revendication 1, **caractérisé en ce que** le liquide est choisi du groupe consistant d'eau fraîche, d'eau saumâtre, eau de mer ou eau salé.

4. Un procédé selon la revendication 1, **caractérisé en ce que** l'eau fraîche ou l'eau de mer constitue le dit liquide, le gluten de blé constitue le dit agent de liaison, et du chlorure de calcium est ajouté au dit liquide.

5. Un bloc d'alimentation fabriqué selon la revendication 1, le dit bloc d'alimentation contenant :
- des particules alimentaires ;
- au moins un agent de liaison ; et
- du liquide,
**caractérisé en ce que** l'agent de liaison est choisi du groupe consistant d'amidon soluble dans l'eau froide et de gluten de blé et est distribué sur les surfaces des particules alimentaires ; et le bloc d'alimentation contient moins de 40% d'eau par poids.

6. Un bloc d'alimentation selon la revendication 5, **caractérisé en ce que** le bloc d'alimentation contient moins de 36% d'eau par poids.

7. Un bloc d'alimentation selon la revendication 5, **caractérisé en ce que** l'amidon est choisi du groupe consistant d'amidon de pomme de terre modifié ou d'amidon de riz modifié.

8. Un bloc d'alimentation selon la revendication 5, **caractérisé en ce que** l'amidon est choisi du groupe consistant d'amidon de céréales, d'amidon de graines, l'amidon de fruits, d'amidon de légumes à racine ou d'amidon de moelle.

9. Un bloc d'alimentation selon la revendication 5, **caractérisé en ce que** le dit gluten de blé consiste de gluten de blé vital.

10. Le bloc d'alimentation selon la revendication 5, **caractérisé en ce que** le dit liquide contient du chlorure de calcium ajouté.
